Europäisches Patentamt

European Patent Office

Office européen des brevets

(11) Publication number: **0 332 445**
**A1**

## EUROPEAN PATENT APPLICATION

(21) Application number: 89302354.9

(22) Date of filing: 09.03.89

(51) Int. Cl.⁴: **A 47 J 27/21**

(30) Priority: 10.03.88 GB 8805741

(43) Date of publication of application:
**13.09.89 Bulletin 89/37**

(84) Designated Contracting States:
**AT BE CH DE ES FR GB GR IT LI LU NL SE**

(71) Applicant: **D.H. HADEN LIMITED**
**Mount Road Burntwood**
**Walsall West Midlands WS7 0AW (GB)**

(72) Inventor: **Duxbury, Eric**
**8 Larkspur Avenue Hammerwich**
**Walsall West Midlands, WS8 7SS (GB)**

(74) Representative: **Yelland, William Alan et al**
**c/o H.N. & W.S. SKERRETT Charles House 148/9 Great**
**Charles Street**
**Birmingham B3 3HT (GB)**

(54) Electric kettles.

(57) A kettle having a two part moulded body, in which the upper and lower mouldings 10 and 14 are formed to enable top and rear controlled and corded and cordless kettles to be constructed; and the lower moulding 14 is optionally of a form which makes provisions for selectively accepting a rear or bottom mounted heating element.

FIG.4.

## Description

## ELECTRIC KETTLES

This invention concerns electric kettles, and body components and switch devices for electric kettles.

There is a known problem of the flooding or wetting of electrical components, e.g. switch mechanisms, with, e.g. steam or condensate, water, which problems can be exacerbated in some forms of kettles if they are overfilled with water to the extent that water enters passages provided to convey steam to thermally responsive switch actuating devices. Many different forms of arrangement for minimising the risk of flooding or reducing the effects of such flooding have been proposed, but most such proposals involve additional costs.

This problem of flooding is reduced in an electric kettle as disclosed in US-A-4544830, which kettle is of spout filled form and comprises a body; a hollow handle moulding superimposed on and secured to the body; a heating element with electric connections secured to lower parts of the body; a steam responsive manually resettable thermostatic switch which is located in a front part of the handle moulding to project into as steam space between the handle moulding and a top part of the body; and electrical leads which extend from the switch to the electrical connections via the interior of the handle moulding. The arrangement of the kettle is such that steam leaves the body via an opening therein to both a spout and a passage to the steam space to cause the switch to switch off the element when the kettle boils. However, steam and condensate water still drain and pass downwards between the handle moulding and the body to the lower part of the kettle in which the electrical connections and boil-dry thermostat for the heating element are disposed.

According to a first aspect of the present invention there is provided an electric kettle comprising an upper body moulding and a thermostatic switch assembly, wherein the upper body moulding integrally incorporates an upper body wall; a peripheral wall incorporating at least part of a spout; and a hollow handle which comprises a front portion extending upwards from an opening to the rear of the spout to an upper portion extending rearwards above and spaced apart from the upper body wall to a rear portion extending downwards at the rear of the moulding to a junction with the upper body wall; and wherein the thermostatic switch assembly is mounted in the handle portion so that steam for actuating the assembly and resultant condensate are constrained to transverse the front portion.

The upper portion is preferably of channel section to locate a cover member which co-operates with the switch assembly to provide a barrier between front and rear parts of the cavity in the upper portion. The rear portion is preferably also of channel section and closable by the cover, and wires or a cable connecting the switch assembly with an element assembly are preferably simply laid in the channel prior to placement of the cover.

The front portion is preferably also partially of channel section which receives a front part of the cover, and the front part of the cover preferably provides a steam vent above the spout.

The invention includes an upper body moulding, for an electric kettle, which moulding incorporates an upper body wall; a peripheral wall incorporating at least part of a pout; and a hollow handle which comprises a front portion extending upwards from an opening to the rear of the spout to an upper portion extending rearwards and spaced apart from above the upper body wall to a rear portion extending downwards at the rear of the moulding to a junction with the upper body wall; wherein a rear portion of said peripheral wall is inwardly recessed to provide a rearwardly opening rear channel; and wherein said handle is formed to incorporate an outwardly open channel which merges with and extends from said rear channel to adjacent to said opening.

A steam-flow restrictor is preferably provided in the handle, e.g. between the steam vent and the thermostatic switch.

The kettle of the invention is particularly inexpensive to assemble, and avoids said problems. However, the upper moulding involves further problems, for example, substantial moulding costs.

According to a second aspect of the present invention there is provided an upper body moulding for an electric kettle having a thermostatic switch or a thermostatic mechanism for actuating a switch, wherein the moulding integrally incorporates an upper body wall; a peripheral wall incorporating at least part of a spout; and a hollow handle which comprises a front portion extending upwards from an opening to the rear of the spout to an upper portion extending rearwards and spaced apart from above the upper body wall to a rear portion extending downwards at the rear of the moulding to a junction with the upper body wall; wherein at said junction there is provided a downwardly open vapour recess upstanding above a median level of the upper body wall; and wherein a rear portion of said peripheral wall is inwardly recessed to provide a rearwardly opening channel to recieve at least part of a thermostatic mechanism or to receive electrical cables to the thermostatic switch.

The upper body moulding may thus be employed in either kettles according to the first aspect of the invention, or, if a steam vent aperture is provided in the moulding at the rear of the vapour recess, in an electric kettle having a steam responsive thermostatic mechanism in the rearwardly opening channel, and the invention includes such an electric kettle.

In either kettle, the upper body moulding is preferably secured to a lower body moulding which may be selected from a first form in which the rear of the peripheral wall is formed to provide a mounting for an element assembly, and a second form in which a bottom wall provides a mounting for the element assembly; or which lower moulding is formed to incorporate or provide formations for both of such forms of mountings.

Electric kettles, as compared with electric water heating jugs, have bodies which are relatively wide in relation to their height, so that kettles are generally more stable than the jugs. However, the jugs have the advantage that, because of their smaller width, a proportionately smaller quantity of water is necessary to cover the heating element to a prescribed depth, so that a smaller quantity of water can be boiled.

In an endeavour to offset this further problem with electric kettles it is known to form a sump in the bottom of the kettle body in order to accommodate the heating element and a relatively small volume of water, but the formation of such a sump necessitates the kettle being provided with a skirt or like costly means to conceal the sump.

It is also known to form the bodies of vessels, such as kettles and jugs, wholly or partly from plastics materials by moulding. However, our experiments indicate that problems arise in and with moulded kettle bodies in which the lower portions are of plastics materials, such problems including moulding difficulties, durability, cost, subsequent component installation and aesthetic appearance.

According to a third aspect of the present invention there is provided a moulded plastics lower body moulding for a body of an electric kettle, in which the lower body moulding provides a substantially central sump to accommodate at least part of an electric heating element, and a further or peripheral sump of relatively narrow radial cross-section spaced outwardly apart from the central sump by an intermediate upstand. The upstand is preferably interrupted by at least one moulded-in flow channel to permit fluid to flow between the sumps.

The central sump may be somewhat eccentric to the median vertical axis of the moulding.

The further peripheral sump is preferably defined between the outer wall of the moulding and the upstand, so that the outer wal extends downwards to a junction with the upstand substantially at the lowest level of the bottom wall of the moulding.

It is also known to make jugs of both cord attached and cordless types. In the cordless type of jug it is known to provide at the rear of the jug an electrical pin connector in which the pins are downwardly directed so as to be engageable in a socket provided at the rear of a stand on which the jug is supported, so that electrical connections between the plug and socket are automatically made or broken as the jug is lowered onto or lifted off the stand.

Whilst the problem of rearward extension of the stands can be reduced by adopting an element assembly and a stand such as are described in our co-pending Application No. 2170662A in respect of jugs, there is a consequential increase in the height of the combination.

However, there are further, e.g. cost and aesthetic problems which arise in attempting to apply such a mode of construction to kettles having moulded bodies, because, for example, of the very great width or diameter of stand which would be required.

According to a fourth aspect of the present invention there is provided kettle apparatus comprising an electric kettle having a body in which the lower portion provides a downwardly open internal intermediate upstand between internal sumps in the bottom of the body; in combination with a stand for the kettle in which the stand provides a peripheral surface having a maximum width or diameter which is no more than 10% greater than the maximum width or diameter of the peripheral surface of the lower portion of the body of the vessel; and further provides, offset inwardly from said intermediate surface, an upstanding male portion which interengages in the peripheral upstand of the kettle as the kettle is lowered onto the stand. The invention also includes a stand configured to receive the lower body. In particular, the invention provides a stand wherein the stand provides a peripheral surface, and offset inwardly from said peripheral surface, an upstanding male portion which engages in the intermediate upstand of the kettle as the kettle is lowered onto the stand. The stand preferably comprises a generally central upstand and a rear upstand, either of which upstands is fitted with a socket connector; and which socket connector, preferably, incorporates a switch actuable by a suitable kettle being lowered onto or lifted off the stand.

This lower portion is preferably a moulding.

The intermediate upstand may be interrupted at the rear of the kettle or moulding by a formation arranged to receive electrical or other control components of the kettle.

Any of the aspects of the invention may be combined with any other or others thereof. For example, the interruptions in the intermediate upstand in the body moulding may be utilised to interengage with depressions in the upstanding male portion in the stand so as to provide radial directional location of the kettle relative to the stand about a common vertical central axis as the kettle is lowered onto the stand.

Said aspects of the invention and combinations thereof greatly contribute to cost reduction in providing a wide variety of kettles from relatively few expensive main components, such as body mouldings, and main assemblies, such as element assemblies and thermostatic mechanisms or switches. To further such cost reduction, the invention further provides a thermostatic switch device comprising a floor provided by a moulding, a thermally responsive device carried by the moulding for actuating an over-centre mechanism disposed above the floor, and a thrust member extending downwards from said mechanism through the floor to a switch, wherein the switch is disposed in a chamber formed in the moulding; wherein the switch is carried by a plug which closes said chamber and carries terminal connectors; and wherein the moulding carries sealing means around said chamber.

In such aspects and combinations thereof, a rear mounted element assembly is preferably of a basic form similar to or developed from that employed in the vessels disclosed in our Patent Specification GB 2102205 and may employ a thermostatic cover-mounted actuating mechanism of similar kind, with or without modification for cordless operation as disclosed in our Specification 2204218. However, instead of employing such a thermostatic mechanism, the element assembly may be modified, e.g. as disclosed herein, for control by a thermostatic switch such as the switch device of the invention. Alternatively, the element assembly may be bottom mounted and formed either for cord-attached or for cordless operation e.g. substantially or generally as disclosed in our 2179810 or our 2195524. The socket stand for cordless forms of the kettle preferably incorporates a switched socket device substantially or functionally equivalent to that disclosed in our 2170662.

In all embodiments, the kettle or upper moulding preferably includes or is provided with a locking lid functionally equivalent to that disclosed in our Application No. 8811279.

The content of all our aforementioned specifications and applications is incorporated hereinto by reference.

The invention further provides a method of making electric kettles comprising forming bodies and separately forming electric heating elements and control devices for the elements, and characterised in that:-

(a) the bodies are formed by securing together separate upper and lower mouldings in which the upper mouldings are each moulded to provide an integral handle of channel section which is united with an upper wall of the moulding at a front end, to the rear of a spout opening, and at a rear end opposite to the spout opening, at which rear end the moulding is shaped to provide a downwardly open vapour recess which extends upwards above the median level of the upper wall of the moulding; and in which the lower mouldings are shaped to provide in the bottom walls thereof element receiving sumps and further sumps, offset outwardly from the element receiving sumps, which element receiving and further sumps are separated by downwardly open internal upstands which are interrupted by channels connecting the sumps;

(b) in that a selection is made of the elements and control devices to select either remotely electrically actuable cut-out switch and element assemblies or directly mechanically actuable cut-out switch and element assemblies, and either thermostatic switches or thermostatic actuators; and

(c) that according to the selection made either installing the thermostatic switch at an upper portion of the handle so that the switch is in sealing engagement with the handle and a closure member to constrain steam to pass to the thermostatic switch via a front part of the handle and condensate to return to the body via that front part, or to instal a thermostatic switch or mechanism in a rear part of the channel provided by the handle and the rear part of the body to receive steam via a steam vent provided between said channel and the vapour recess.

The invention and further aspects, novel features and advantages will be described further, by way of example, with reference to the accompanying diagrammatic drawings, wherein:-

FIGURE 1 shows a first embodiment of cordless kettle in side elevation with internal parts and a switch device shown in broken line outline,

FIGURES 2 and 3 are sectional views of the switch device in situ in a handle of the kettle, in "on" and "off" switched positions respectively;

FIGURE 4 shows a second embodiment in vertical section;

FIGURE 5 shows a plan view of the lower moulding of the kettle shown in FIGURE 4;

FIGURE 6 shows an enlarged detail of the upper portion of FIGURE 4;

FIGURE 7 shows a third embodiment in vertical section;

FIGURE 8 shows a plan view of the lower moulding of the kettle shown in FIGURE 7;

FIGURE 9 is a diagram showing a modification applicable to a third embodiment;

FIGURE 10 shows a supporting base for cordless operation of the kettles in vertical section; and

FIGURE 11 shows the base in plan.

In all embodiments shown, the kettle comprises, in general, a two-part moulded body. The upper moulding 10 integrally provides a spout 11 and an upper part 12 of a hollow handle 13 of "top bridging" form. The lower moulding 14 supports a main electrical assembly comprising an electrical immersion heater 15 or 15A provided with an overheat cut-out switch and connector assembly 16 which in most embodiments has terminal connectors in the form of pins 17 and an earth connector in the form of a pin 18.

The kettle may be employed as a "cordless" appliance by being sat upon a stand 80 providing an automatic electrical supply socket to receive the pins 17 and 18; or as a "cord attached" appliance either by having a cabled socket releasably secured to the assembly 16, or by having the pins omitted and a power supply cable connected to the terminal and earth connectors in the assembly 16, the body providing a lower space through which the supply cable can run rearwards to an opening (not shown).

The two mouldings 10 and 14 are joined at a seam 19, e.g. by welding, which seam is preferably at least partially obscured by a flange moulded into the upper moulding 10.

The handle 13 provides provides a steam space 20, which extends upwards in a front part of the handle from adjacent the spout, and a connector space 21 which extends rearwards in the upper part 12 of the handle and downwards in the rear part of the handle. The space 21 is continued downwards by a duct 22, provided by respective recesses in the rear parts of the peripheral walls of the upper and lower mouldings 10 and 14, which duct merges in some embodiments with the lower space below a bottom wall 24 of the lower moulding 14.

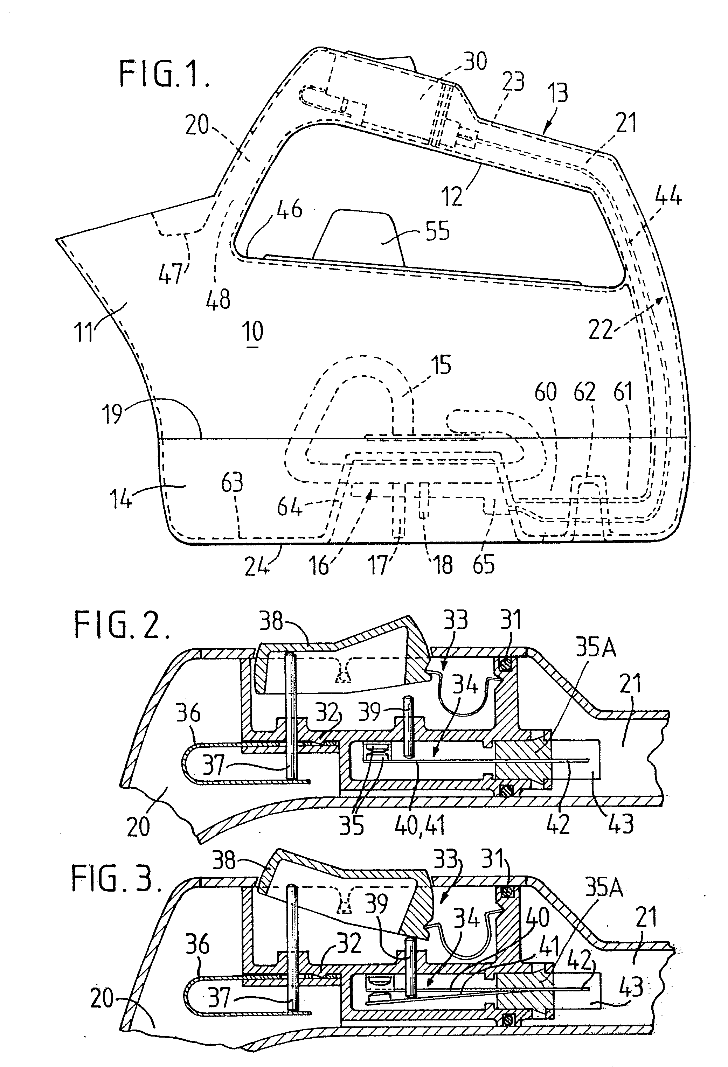

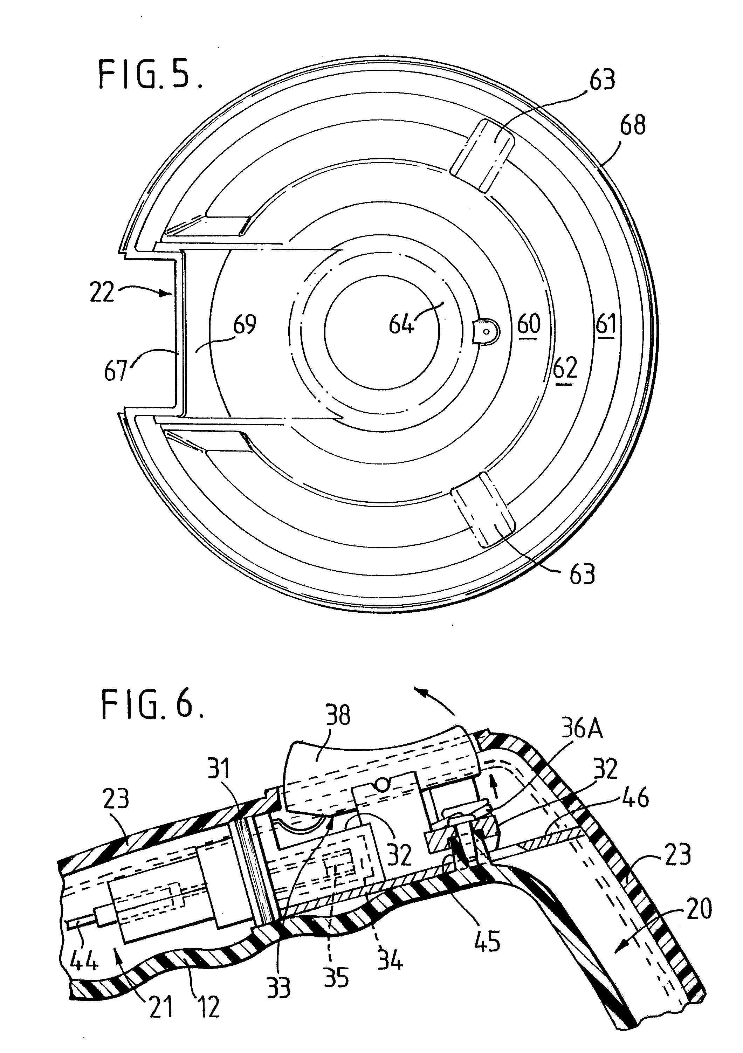

The handle is formed so that a switch device 30 can be secured in the handle and covered by a closure member 23 or like cover of the handle so as to provide a partition in the upper part of the handle between the spaces 20 and 21. The device 30 carries an elastomeric sealing ring 31 which provides a seal between the handle and the device. The switch device comprises a moulded body having a floor 32 between an over-centre mechanism 33 and a switch chamber 34 in which electrical components including contacts 35 of a switch are disposed. Said components are carried by a plug 35A which closes the chamber. The floor extends forwards from the switch chamber to carry or locate a thermally responsive device e.g. a bimetallic strip 36 or a memory metal coil 36A. In the embodiment shown in FIGURE 2, a first push rod 37 extends through the floor between the strip 36 and a manually actuable pivotally mounted rocker 38 of the mechanism 33 whereas in the embodiment shown in FIGURE 6, the coil 36A is expandable to contact the rocker 38 directly and the floor is stepped. In both embodiments a rear push rod 39 extends through the floor from the switch to the rocker.

The switch contacts 35 are carried by arms 40 and 41 to respective terminals of which only one terminal 42 is shown in FIGURES 2 and 3, the other being behind a separator or optional earth terminal 43. In the switch closed position the arms 40 and 41 are parallel. When the switch is opened, by manual displacement of the rocker or upward motion of the first push rod 37 or coil 36A to to displace the rocker, the rear push rod is moved downwards to displace the arm 41 and open the contacts. The rocker projects through an opening in the closure member 23.

The switch device 30 is connected electrically with the assembly 16 by an electrical lead or wires 44 extending from the terminals 42,43 within the space 21 and the duct 22.

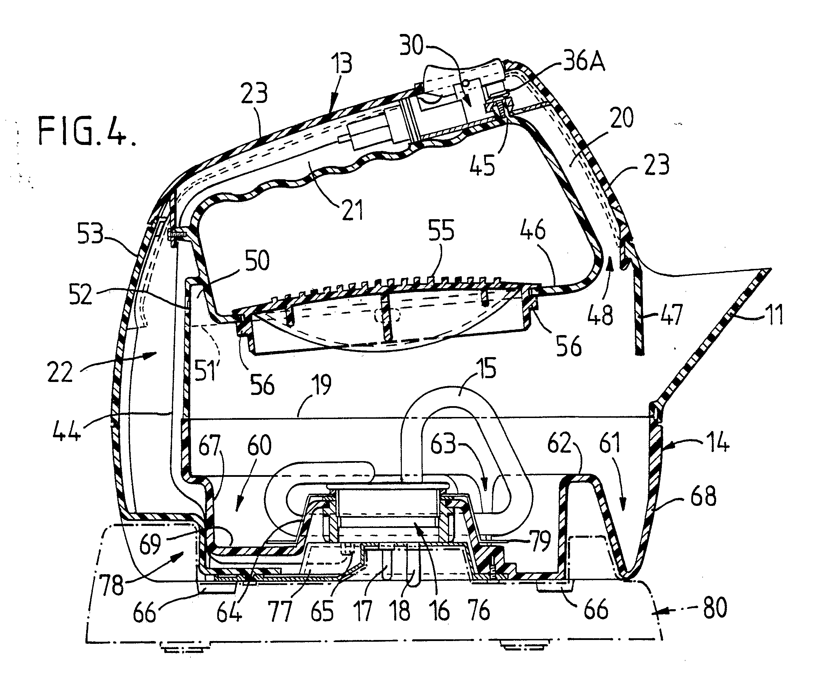

Whilst the switch device 30 may be secured in the handle by any suitable means, it is preferred, as shown in FIGURES 4,6 and 7, to provide mountings 45 in the handle to which a front part of the floor 32, remote from the seal 31, is secured, e.g. by fasteners, the distance between the mountings and the seal 31 in conjunction with the material and the stiffness of the floor being such that the rear of the device is movable slightly by compression of the seal 31 to centralise in the handle for improving the sealing efficiency of the seal. The mountings 45 may locate a steam restrictor insert 46 in the steam space; or the closure member 23, the floor 32 and/or the moulding 10 may be formed to provide a restriction in the handle to limit the flow of steam to the device 30. A steam vent may be provided in the front part of the member 23 above the spout, to receive steam pressure in the front of the handle, as shown in FIGURE 4.

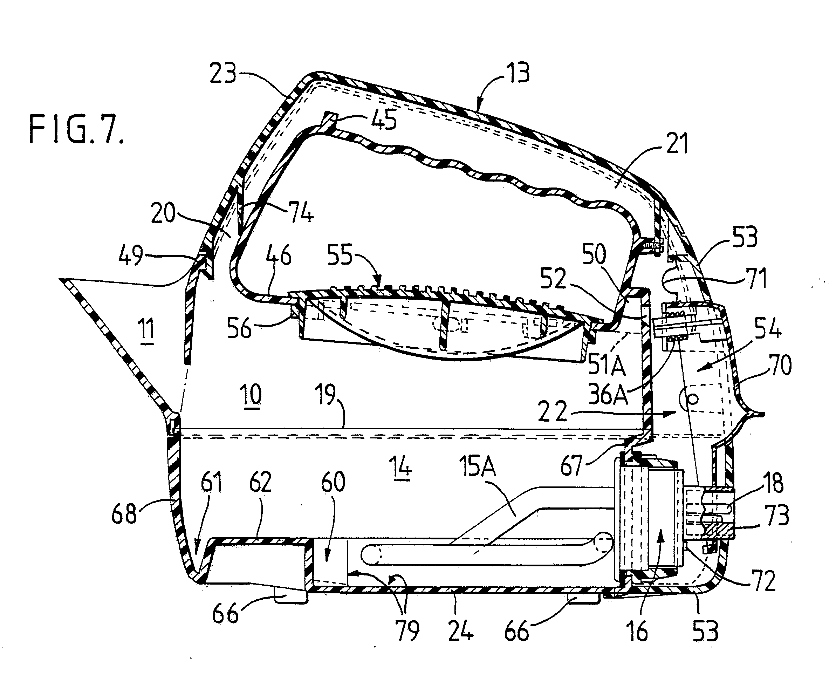

At the junction of the front part of the handle 13 with an upper or top body wall 46, the spout 11 and the peripheral wall, the moulding 10 provides a partition 47 between the spout and the interior of the body to restrict the exit of steam via the spout, so that some of the steam flows upwards through an opening 48 (at said junction and to the rear of the spout) into the handle; and at the top of said junction the moulding 10 provides a formation 49 with which a lower front end of the closure member 23 interengages. From this formation to a rear junction of the handle with the upper and peripheral body walls of the moulding 10, the handle is preferably of outwardly open channel section, and is closable by the member 23 (secured e.g. by fasteners to rear mountings in the handle as shown in FIGURES 4 and 7) to define the spaces 20 and 21.

The upper moulding 10 is formed to permit construction of kettles which employ forms of thermostatic devices, other than the switch device 30, to control the immersion heater 15, or which employ a thermostatic switch functionally equivalent to the device 30 installed at the rear of the kettle body in the duct 22. In particular, as shown in FIGURES 4 and 7, within said rear junction the moulding 10 is formed to provide a vapour recess 50 which opens downwards into the interior of the body and extends upwards to above a median level 51 of the top body wall 46. To the rear of this recess 50, the rear part of the peripheral wall is provided with a preformed, partially preformed (FIGURE 4) or subsequently formed or completed (FIGURE 7) steam vent 52; and said rear part is deeply forwardly recessed to form a rearwardly open channel (defining part of the duct 22), which channel is closable by either a lower extension of the closure member 23 or by a separate rear closure member 53 which, optionally, carries or covers a thermostatic device 54 (as shown in FIGURE 7) or the thermostatic switch.

The upper body wall has an aperture to receive a lid 55. The aperture is of sufficient diameter to admit the immersion heater 15 or 15A during assembly of the kettle, and is notched at intervals to allow locking projections 56 on the lid to enter the body. The lid is arcuately movable in the aperture to engage the projections below the upper body wall.

The lower moulding 14 is formed to provide a main or element receiving generally central sump 60 and a secondary or peripheral sump 61 in the bottom wall. Between the sumps 60 and 61, there is an intermediate downwardly open upstand 62 in the bottom wall. The sump 61 is thus defined by the peripheral body wall and the keystand which meet at a strong V-shaped junction at the lowest level of the body. The sump 61 and the upstand are interrupted at a rear by the formation providing a deep rearwardly open recess in the rear portion of the peripheral body wall 68, which recess defines part of the duct 22. The upstand is also interrupted by channels 63 which connect the sumps.

In the particular examples shown in FIGURES 1 and 4 the switch 16 is employed, and the lower moulding provides a central upstand 64 which provides a mounting formation for, and is apertured to receive, the heating element 15 so that a head of the element extends downwards through and is secured to the bottom wall, and the overheat cut-out switch and connector assembly 16 is arranged so that the pins 17 and 18 project downwards to cooperate with a supply socket in a stand for cordless operation of the kettle.

The arrangement of the assembly 16 is generally as described in our co-pending Patent Application No. 2185857 except in that, and referring in particular to FIGURE 2 of that co-pending Specification the "switch 20" described in that Specification is omitted and replaced by a permanent connection and the "conductor strip 54" is interrupted and connected to two terminals which project through the switch body alongside the pins to receive connectors 65.

The connectors 65 are attached to the ends of the wires 44 in these present embodiments.

Also shown in FIGURE 4 are feet 66 for the kettle which are integrally moulded at the bottom of the bottom wall below the outer sump or the channels 63 so as to be minimally heated during operation of the kettle.

The lower moulding employed in the foregoing example can be adopted for a rear fixed element by providing a suitable aperture in a mounting formation provided by the flat forwardly offset part 67 of the rear of the peripheral wall 68 and by forming the heating element 15A to extend around the central upstand in the main sump. However, as shown in the example illustrated in FIGURE 7 it is preferred to provide a modified form of lower moulding where rear fixed heating elements 15A are required, this modified form of lower moulding being shaped to omit the central upstand 64 and the small raised rear floor section 69 of the central sump. This FIGURE 7 also shows the use of an assembly 16 constructed generally in accordance with the said Specification 2185857, the internal switch of which is operated by a thermostatic actuating mechanism 54 mounted on the rear closure member. This thermostatic mechanism comprises a manually actuable rocker member 70 which extends through the cover and is biased into either of two stable positions by an overcentre spring 71, and carries the memory metal thermostatic actuator 36A in a position adjacent the fully formed steam vent 52. At the lower end of the rocker there is an abutment to actuate the switch contained in the assembly 16 via a push-rod 72. In this example the pins 17 and 18 extend rearwardly in a rearwardly open socket cover 73 attached to the assembly 16 so as to receive a plug connector of a supply cable.

For use with such a rear mounted thermostatic actuator 54, the closure member for the handle provides a barrier 74 to steam passing upwards within the front part of the handle.

Furthermore the thermostatic mechanism may be replaced by the switch 30 mounted so that the thermally responsive member is adjacent the steam vent, and the previously described modification of the connector assembly 16 employed to receive the terminal connectors for the wires.

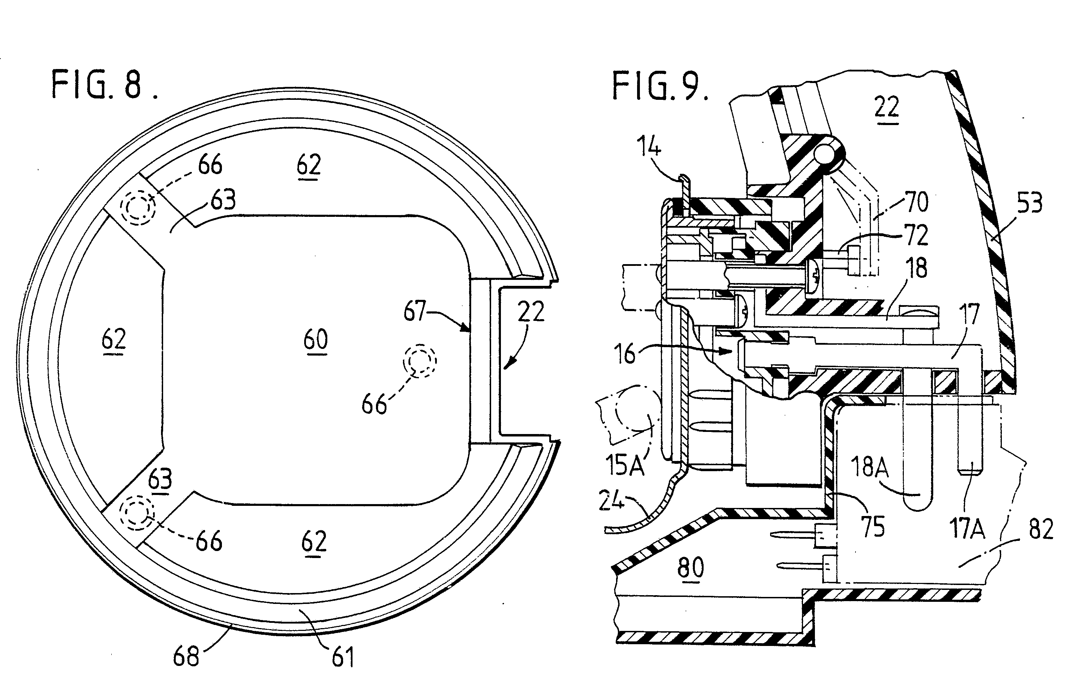

Furthermore this example may be modified for cordless operation as diagrammed in FIGURE 9, by extending and cranking the pins 17 and 18 to provide downwardly extending portions 17A and 18A and by stepping the rear closure member to fit over a socket containing rear upstand 75 in the upper surface of the stand. FIGURE 9 also shows a modified form of thermostatic mechanism or actuator 54 which is carried by the switch and connector assembly 16 instead of the rear closure member.

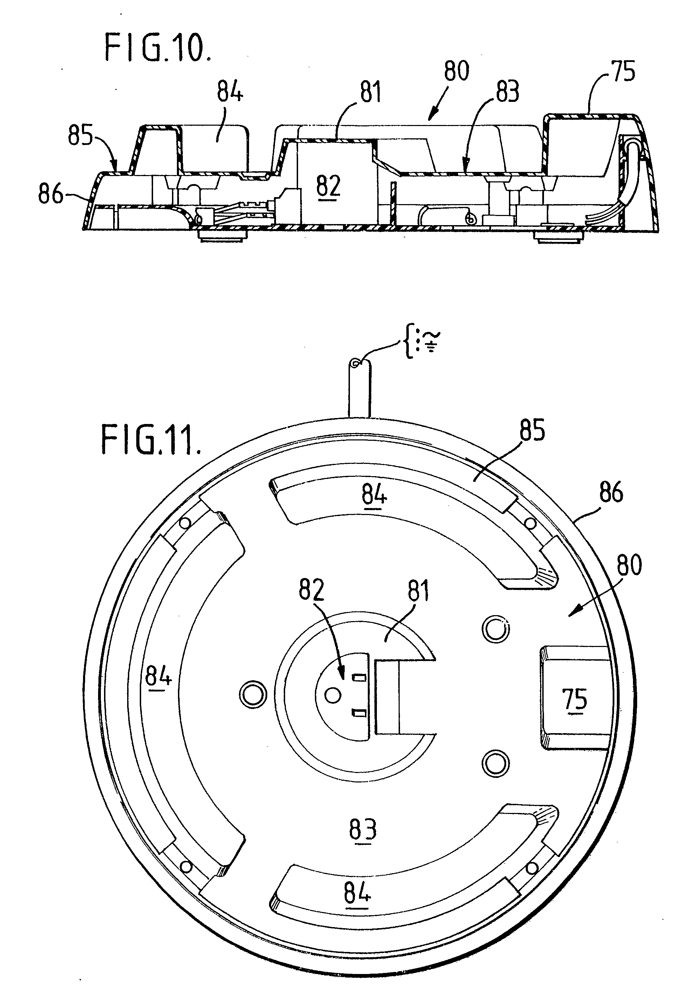

An example of a stand 80 for use with the kettles is shown in FIGURES 10 and 11, which stand is primarily intended for use with the form of lower body moulding shown in FIGURE 4. This stand provides a central upstand 81 in which a socket connector 82 is disposed, a well 83 to receive the central portion of the bottom wall defining the main sump 60, an outer upstand 84 which interengages in the downwardly open upstand 62 in the kettle, and a low-level peripheral portion 85 on which the undersurface of the peripheral sump rests e.g. by means of the feet, when the kettle is lowered onto the stand. The socket device 82 may merely provide individual conductive socket connectors to receive the terminal pins 17 and 18 (or 17A and 18A), but is preferably constructed as described in our aforementioned Specification 2170662. The parts of the upstand 84 are interrupted by depressions, e.g. to floor level of the well 83 and portion 85 (to receive the channels 63) and on each side of the upstand 75 (to receive the rear formation in the moulding 14).

The stand may be modified by omitting the central upstand 81 and re-locating the socket device in a rear upstand 75 to suit the form of kettle described with reference to FIGURES 7 and 9. For use with the first and second embodiments, the upstand 75 may be omitted, and optionally replaced by a further part of the upstand 84.

It is to be noted that in all embodiments the overall diameter or plan area of the stand 80 is substantially equal to or only very slightly larger than the diameter or underside plan area of the lower moulding 14, and the peripheral wall 86 of the stand may be shaped to harmonise with and complement the peripheral shape of the lower peripheral wall portion 68 of the lower moulding. Furthermore, all the surfaces on the kettle, which interengage with surfaces on the stand to guide and orientate the kettle as it is lowered onto the stand are downwardly facing or are offset inwards from the external surface of the periphery of the kettle, so that unsightly scuffing or scratching of said external peripheral surface is avoided or minimised.

The invention is not confined to details of the foregoing examples, and the various features of the various embodiments may be combined in other ways, and variations thereof and functional equivalents thereto may be adopted in variations of the kettles described within the scope of the present invention. For example, a metal heat shield 79, which is preferably earthed by connection to the element assembly 15 or 15A, is preferably interposed between the heating portion of the element and the bottom wall of the body moulding.

For further example, the embodiment described with reference to FIGURE 4 may be varied in several ways. Firstly, it may be modified for corded operation with a permanently attached cord connected to terminal connectors substituted for the pins 17 and 18, and in such a variation the bottom cover or closure member 76 (secured to the rear closure member and bottom wall) would be varied to enclose all the supply and switch terminal connectors within a space 77 between the bottom closure and the underside of the lower moulding. The supply cable would be anchored by a clamping device secured by fasteners to the lower or lower part of rear closure member and would emerge through a rear aperture at the point indicated by arrow 78.

Furthermore the embodiment may be varied to employ the form of assembly 16 disclosed in our aforementioned Specification No. 2185857, by providing instead of the switch 30 a form of thermostatic actuating mechanism functionally equivalent to that described in our aforementioned Specification No. 2102205, so that a rocking lever, pivotally mounted on the closure member or at the lower rear of the lower moulding, extends downwards from said mechanism in the duct 22 and forwards in the space between the bottom closure and the underside of the lower moulding to actuate the switch in the assembly 16 via a downwardly projecting push-rod. The mechanism for actuating the rocking lever may comprise an overcentre biased manually actuable rocker, which projects through the rear closure, and a thermally responsive device located adjacent the steam vent to actuate the rocker when the vessel boils.

From the above it can be seen that a wide variety of kettles can be constructed using a single upper moulding and one or two lower mouldings in conjunction with a variety of less expensive closure members or like covers each dedicated or suited to a particular arrangement of the mechanisms or devices for actuating the heating element.

Where two forms of lower moulding are provided, it is preferred to take advantage thereof by also varying the internal capacity of such mouldings to enable kettles of different volumes to be constructed using the same upper moulding.

The level at which the weld is formed, and thus the relative depth proportions of the upper and lower mouldings, may be varied. For example, the lower moulding may provide part of the spout. An intermediate, e.g. rearwardly recessed substantially annular, moulding may be interposed between and welded or otherwise joined thereto, to extend the height of the body and the duct 22. Instead of welding to provide a seam 19, the upper and lower mouldings may be joined and connected by a connecting ring.

## Claims

1. An electric kettle comprising an upper body moulding and a thermostatic switch assembly, and characterised in that the upper body moulding (10) integrally incorporates an upper body wall (46); a peripheral wall incorporating at least part of a spout (11); and a hollow handle (13) which comprises a front portion extending upwards, from an opening (48) to the rear of the spout, to an upper portion (12) which extends rearwards, above and spaced apart from the upper body wall, to a rear portion extending downwards at the rear of the moulding to a junction with the upper body wall; and in that the thermostatic switch assembly (30) is mounted in the upper portion (12) so that steam for actuating the assembly and resultant condensate are constrained to traverse the front portion.

2. A kettle as claimed in Claim 1 wherein the front portion of the handle is partially of channel section which receives a front part of a cover (23), and the front part of the cover provides a steam vent above the spout (11); and wherein a steam-flow restrictor is provided in the handle between the steam vent and the thermostatic switch.

3. An upper body moulding for or in an electric kettle as claimed in Claim 1 or 2, and characterised in that the moulding (10) integrally incorporates an upper body wall (46); a peripheral wall incorporating at least part of a spout (11); and a hollow handle (13) which comprises a front portion extending upwards from an opening (48) to the rear of the spout to an upper portion (12) extending rearwards and spaced apart from above the upper body wall (46) to a rear portion extending downwards at the rear of the moulding to a junction with the upper body wall; in that a rear portion of the peripheral wall is inwardly recessed to provide a rearwardly opening rear channel (22); and in that said handle (13) is formed to incorporate an outwardly open channel (20,21) which merges with and extents from said rear channel (22) to adjacent said opening (48).

4. A moulding as claimed in Claim 3 and characterised in that at said junction there is provided a downwardly open vapour recess (50) upstanding above a median level (51) of the upper body wall; and in that a rear portion of said peripheral wall is inwardly recessed to provide a rearwardly opening channel (22) to receive at least part of a thermostatic mechanism or switch (54 or 30) or to receive electrical cables (44) to a switch (30) in said upper portion.

5. A moulding as claimed in Claim 3 or 4 wherein a mounting for a thermostatic switch is provided in the handle, and wherein a steam vent is formed or partially pre-formed in the moulding at the rear of the vapour recess.

6. An electric kettle comprising a thermostatic mechanism or switch (54 or 30) responsive to the presence of steam to control a heating element (15 or 15A) mounted in a lower body moulding (14); and an upper body moulding (10) as claimed in Claim 3 or 4; and characterised in that a rear portion of said peripheral wall is inwardly recessed to provide a rearwardly opening channel (22) to receive at least part of the thermostatic mechanism or switch (54 or 30); and in that the front portion of the handle (13) is of channel section to receive and cooperate with part of a cover (23) to provide a barrier (74) in the interior (20,21) of the handle (13).

7. A kettle as claimed in Claim 1,2 or 6 wherein the lower moulding provides integrally formed or partially preformed mounting formations, in a central or element receiving upstand (64) in a bottom wall (24) of the moulding and in a forwardly recessed rear portion (67) of the peripheral wall of the moulding (14), to receive either a bottom mounted element assembly (15,16) or a rear mounted element assembly (15A,16).

8. A kettle as claimed in Claim 1,2,6 or 7 and characterised in that the lower body moulding provides a substantially central or main sump (60) to accommodate at least part of an electric heating element (15 or 15A), and a further or peripheral sump (61) of relatively narrow radial cross-section spaced outwardly apart from the central or main sump by an intermediate upstand (62).

9. A kettle as claimed in Claim 8 wherein the upstand is interrupted by at least one moulded-in flow channel (63) to permit fluid to flow between the sumps (60 and 61).

10. A kettle as claimed in Claim 8 wherein the further or peripheral sump (62) is defined between the outer wall (14) of the moulding and the upstand (62), so that the outer wall extends downwards to a V-shaped junction with the upstand substantially at the lowest level of the bottom wall (24) of the moulding (14).

11. Kettle apparatus comprising a kettle as claimed in Claim 9 or 10 in combination with a stand (80) for cordless operation of the kettle, wherein the stand provides a peripheral surface (86) having a maximum width or diameter which is no more than 10% greater than the maximum width or diameter of the peripheral surface (68) of the lower portion (14) of the body of the vessel; and further provides, offset inwardly from said peripheral surface (86), an upstanding male portion (84) which interengages in the intermediate upstand (62) of the kettle as the kettle is lowered onto the stand.

12. Kettle apparatus as claimed in Claim 11 wherein the intermediate upstand (62) is interrupted at the rear of the kettle by a channel shaped formation (22) arranged to receive electrical or other control components (44,16) of the kettle.

13. Kettle apparatus as claimed in Claim 11 or 12 wherein interruptions in the intermediate upstand (62) by the channels (63) or the formation (22) are utilised to interengage with depressions between parts of the upstanding male portion (84) in the stand (80) so as to provide radial directional location of the kettle relative to the stand about a common vertical central axis as the kettle is lowered onto the stand.

14. Kettle apparatus as claimed in Claim 11, 12 or 13 wherein the stand comprises a generally central upstand (81) and a rear upstand (75), either of which upstands is fitted with a socket connector (82); and in that said socket connector incorporates a switch actuable by a suitable kettle being lowered onto or lifted off the stand.

15. An electric kettle as claimed in Claim 1 or 2 wherein the thermostatic switch device (30) comprises a floor (32) provided by a moulding, a thermally responsive device (36 or 36A) carried by the moulding for actuating an over-centre mechanism (33) disposed above the floor, and a thrust member (30) extending downwards from said mechanism through the floor to a switch (35), wherein the switch is disposed in a chamber formed in the moulding; wherein the switch is carried by a plug (35A) which closes said chamber and carries terminal connectors; and wherein the moulding carries sealing means (31) around said chamber.

16. a method of making electric kettles comprising forming bodies and separately forming electric heating elements and control devices for the elements, and characterised in that:-

(a) the bodies are formed by securing together separate upper and lower body mouldings in which the upper mouldings are each moulded to provide an integral handle of channel section which are united with an upper wall of the moulding at a front end, to the rear of a spout opening, and at a rear end opposite to the spout opening, at which rear end the moulding is shaped to provide a downwardly open vapour recess which extends upwards above the median level of the upper wall of the moulding; and in which the lower mouldings are shaped to provide in the bottom walls thereof element receiving sumps and further sumps, offset outwardly from the element receiving sumps, which element receiving and further sumps are separated by downwardly open internal upstands which are interrupted by channels connecting the sumps;

(b) in that a selection is made of the elements and control devices to select either remotely electrically actuable cut-out switch and element assemblies or directly mechanically actuable cut-out switch and element assemblies, and either thermostatic switches or thermostatic actuators; and

(c) that according to the selection made either installing the thermostatic switch at an upper portion of the handle so that the switch is in sealing engagement with the handle and a closure member to constrain steam to pass to the thermostatic switch via a front part of the handle and condensate to return to the body via that front part, or to instal a thermostatic switch or mechanism in a rear part of the body to receive steam via a steam vent provided between said channel and the vapour recess.

17. A kettle made by the method claimed in Claim 16.

EP 0 332 445 A1

FIG.1.

FIG.2.

FIG.3.

FIG.4.

EP 0 332 445 A1

FIG. 5.

FIG. 6.

FIG.7.

FIG. 9.

FIG. 8.

FIG.10.

FIG.11.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 544 830 (MILLER)<br>* Whole document * | 1,2,15 | A 47 J 27/21 |
| A | GB-A-2 131 282 (GILFORD ELECTRIC CO.)<br>* Whole document * | 1,16,17 | |
| A | GB-A-1 488 391 (HOTPOINT LTD)<br>* Whole document * | 1,3,4,6,7 | |
| A | GB-A-2 083 328 (DELTA MATERIALS)<br>* Figure 1; page 1, lines 76-96 * | 1,4,5 | |
| A | FR-A-1 331 376 (HINDRICHS-AUFFERMANN)<br>* Whole document * | 1,3,7,16,17 | |
| | | | **TECHNICAL FIELDS SEARCHED (Int. Cl.4)**<br><br>A 47 J |

The present search report has been drawn up for all claims

| Place of search | Date of completion of the search | Examiner |
|---|---|---|
| THE HAGUE | 26-05-1989 | MEINDERS H. |

EPO FORM 1503 03.82 (P0401)